Europäisches Patentamt

(19) European Patent Office

Office européen des brevets

(11) Publication number : **0 391 514 B1**

(12) **EUROPEAN PATENT SPECIFICATION**

(45) Date of publication of patent specification :
04.08.93 Bulletin 93/31

(51) Int. Cl.⁵ : **C09K 11/02, C09K 11/84, C09K 11/78, H01J 29/18**

(21) Application number : **90300565.0**

(22) Date of filing : **19.01.90**

(54) **Filter-coated red phosphors.**

(30) Priority : **03.04.89 KR 438789**

(43) Date of publication of application :
**10.10.90 Bulletin 90/41**

(45) Publication of the grant of the patent :
**04.08.93 Bulletin 93/31**

(84) Designated Contracting States :
**DE GB NL**

(56) References cited :
**FR-A- 2 437 431
DATABASE DERWENT WORLD PATENT IN-
DEX, AN 88-124386, Derwent Publications Ltd,
London, GB; & JP-A-63 069 885
DATABASE DERWENT WORLD PATENT IN-
DEX, AN 85-175025, Derwent Publications Ltd,
London, GB; & JP-A-60 104 176**

(73) Proprietor : **SAMSUNG ELECTRON DEVICES
CO., LTD.
575, Shin-ri, Taean-eub
Hwaseong-gun, Kyunggi-do (KR)**

(72) Inventor : **Kim, Ung-soo
45-404, Kwonsum Apt., Kwonsun-dong
Suwon, Kyunggi-do (KR)**

(74) Representative : **Holmes, Michael John et al
Frank B. Dehn & Co. Imperial House 15-19
Kingsway
London WC2B 6UZ (GB)**

## Description

The present invention relates to a filter-coated red phosphor for a cathode ray tube, particularly to a red phosphor comprising a matrix phosphor coated with a filter material composed of iron oxide admixed with manganese oxide and/or magnesium oxide.

There are a number of ways of improving the contrast characteristics of the screen of a cathode ray tube, the most positive and desirable method being that a filter material capable of absorbing light rays of a certain wavelength band is coated on the surface of the matrix phosphor.

Thus, for example, red phosphors have been coated with a filter material which consists of cadmium sulphoselenide ((Cd, Se)S), as disclosed in U.S. Patents 3,308,326 and 3,875,449. Red iron oxide ($\alpha$-Fe$_2$O$_3$) and lead oxide (Pb$_2$O$_3$) have also been proposed as suitable filter materials.

However, of the above mentioned filter materials, cadmium sulphoselenide and lead oxide contain cadmium and lead which are harmful to the human body, and can aggravate environmental pollution. Therefore red iron oxide is most used at present. However, red phosphors coated with iron oxide filter material cannot produce a natural or approximately natural colour when excited, e.g. by ultra-violet rays or electrons.

It is an object of the present invention to provide a filter-coated phosphor in which the above described disadvantages of the conventional techniques can be overcome.

Accordingly the invention provides a filter-coated red phosphor comprising a matrix phosphor and a filter material coated thereon, characterized in that said filter material comprises iron oxide mixed with manganese oxide and/or magnesium oxide.

The proportions of manganese oxide and/or magnesium oxide used in the filter materials of the invention may vary widely, e.g. in the range 5-60 wt % relative to the amount of iron oxide. The filter materials are thus of indeterminate structure but may, for example, be represented by formulae such as MnFe$_2$O$_4$ and MgFe$_2$O$_4$.

These filter materials are water-insoluble and superior to previously disclosed filter materials in their heat resistance, spectroscopic reflectivity and contrast ratio.

The matrix phosphor may, for example, be any of the red phosphors known in the art, such as europium-activated oxides and oxysulphides of gadolinium and yttrium and europium-activated cadmium oxysulphide. Preferred matrix phosphors include those represented by the formulae Y$_2$O$_2$S:Eu, Y$_2$O$_2$: Eu and Cd$_2$O$_2$S: Eu.

Coating of the filter material onto the matrix phosphor may be accomplished by conventional methods.

The following non-limitative Examples serve to illustrate the invention.

### Example 1

MnO$_2$ was added to $\alpha$-Fe$_2$O$_3$ in the amount 50 wt% relative to the $\alpha$-Fe$_2$O$_3$ and mixed by means of ball mills. The resulting mixture was baked in a furnace at a temperature of 500°C for 2 hours and then crushed into a powder having appropriate particle size, thereby yielding filter material A.

### Example 2

The procedure of Example 1 was repeated except that MgO (50 wt %) was used in place of MnO$_2$, thereby yielding filter material B.

### Example 3

MnO$_2$ was added to $\alpha$-Fe$_2$O$_3$ in the amount 10 wt % relative to the $\alpha$-Fe$_2$O$_3$ and mixed together by means of ball mills. The resulting mixture was baked in a furnace at a temperature of 600°C for 2 hours and then crushed into a powder having appropriate particle size, thereby yielding filter material C.

### Example 4

The procedure of Example 3 was repeated except that MgO (10 wt %) was used in place of MnO$_2$, thereby yielding filter material D.

The filter materials A, B, C and D obtained as described above can be used separately or in combination.

The colour coordinates and the spectroscopic reflectance of the filter materials A, B, C and D are shown in the table below.

| Classification | Colour coordinate | | Reflectance | |
|---|---|---|---|---|
| | X | Y | 500nm | 650nm |
| A | 0.46 | 0.43 | 5.41 | 40.30 |
| B | 0.48 | 0.42 | 5.62 | 40.32 |
| C | 0.49 | 0.41 | 5.55 | 40.91 |
| D | 0.50 | 0.40 | 5.82 | 40.10 |
| $\alpha$-Fe$_2$O$_3$ | 0.50 | 0.41 | 6.296 | 43.02 |

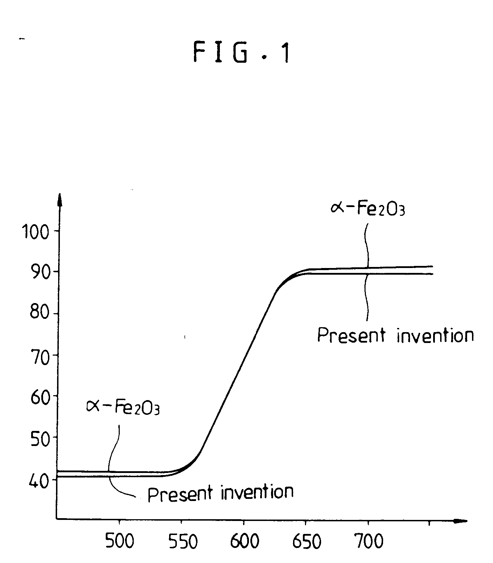

As can be seen from the table, the filter materials of the present invention show lower reflectance in the blue region below 550 nm and in the red region above 650 nm compared with the conventional filter material $\alpha$-Fe$_2$O$_3$. This is confirmed by Fig. 1 in the accompanying drawing, which shows plots of % reflectance against wavelength of incident exciting light for a conventional $\alpha$-Fe$_2$O$_3$ filter-coated phosphor and a filter-coated phosphor according to the invention.

These results confirm the suitability of the filter materials of the invention for use in conjunction with red matrix phosphors and demonstrate their advantageous property of increased absorption in the blue region below 550 nm.

Thus, the filter-coated phosphors according to the present invention use filter materials which do not include ingredients harmful to the human body and which do not cause environmental pollution. They also exhibit a high contrast ratio, thereby improving the quality of the screen image.

## Claims

1. A filter-coated red phosphor comprising a matrix phosphor and a filter material coated thereon characterized in that said filter material comprises iron oxide mixed with manganese oxide and/or magnesium oxide.

2. A filter-coated red phosphor as claimed in claim 1 wherein said matrix phosphor is represented by one of the formulae Y$_2$O$_2$S:Eu, Y$_2$O$_2$:Eu and Cd$_2$O$_2$S:Eu.

## Patentansprüche

1. Roter Leuchtstoff mit aufgetragenem Filter, bestehend aus einem Matrix-Leuchtstoff und einem darauf aufgetragenen Filtermaterial, dadurch gekennzeichnet, daß das Filtermaterial Eisenoxid im Gemisch mit Manganoxid und/oder Magnesiumoxid umfaßt.

2. Roter Leuchtstoff mit aufgetragenem Filter nach Anspruch 1, worin der Matrix-Leuchtstoff durch eine der Formeln Y$_2$O$_2$S:Eu, Y$_2$O$_2$:Eu und Cd$_2$O$_2$S:Eu repräsentiert wird.

**Revendications**

1. Phosphore rouge à revêtement filtrant, comprenant une matrice de phosphore revêtue d'une matière de filtrage, caractérisé en ce que la matière de filtrage comprend de l'oxyde de fer en mélange avec de l'oxyde de manganèse et/ou de l'oxyde de magnésium.

2. Phosphore rouge à revêtement filtrant suivant la revendication 1, dans lequel la matrice de phosphore est représentée par l'une des formules $Y_2O_2S:Eu$, $Y_2O_2:Eu$ et $Cd_2O_2S:Eu$.

# FIG.1